# EUROPÄISCHE PATENTANMELDUNG

(11) **EP 4 180 112 A1**
(43) Veröffentlichungstag der Anmeldung: **17.05.2023**
(21) Anmeldenummer: 22200757.7
(22) Anmeldetag: 11.10.2022
(51) Int. Cl.: B01D 46/00, B01D 46/10

(54) **LUFTFILTER UND VERFAHREN ZUR BESTIMMUNG EINES VERSCHMUTZUNGSGRADES EINES SOLCHEN LUFTFILTERS**

(30) Priorität: 10.11.2021 DE 102021212646
(71) Anmelder: Siemens Mobility GmbH, 81739 München (DE)
(72) Erfinder: Häußler, Andreas, 42659 Solingen (DE); Vreydal, Daniel, 52477 Alsdorf (DE)
(74) Vertreter: Siemens Patent Attorneys

(57) **Zusammenfassung**

Die Erfindung betrifft ein Luftfilter zum Einsatz bei einem Klimagerät oder einem Klimakanal, mit einer Filtermatte zum Herausfiltern unerwünschter Partikel aus einem anströmenden Luftstrom, wobei die Filtermatte mit einer elektrisch leitfähigen Beschichtung versehen ist und elektrische Kontakte zur Beaufschlagung der Beschichtung mit einer Messspannung aufweist.

## Beschreibung

Die Erfindung bezieht sich auf einen Luftfilter zum Einsatz bei einem Klimagerät oder einem Klimakanal, mit einer Filtermatte zum Herausfiltern unerwünschter Partikel aus einem anströmenden Luftstrom, sowie auf ein Verfahren zur Bestimmung eines Verschmutzungsgrades eines solchen Luftfilters.

Ein solches Luftfilter kommt beispielsweise bei Fahrzeugen zur Personenbeförderung zum Einsatz. Im Einzelnen werden Einlassöffnungen von Klimageräten mit solchen Luftfiltern ausgestattet. Bei Schienenfahrzeugen sind diese Luftfilter in Einlassöffnungen von Klimageräten angeordnet, die zur Beaufschlagung eines Fahrgastraums oder auch eines Fahrerraums mit konditionierter Zuluft verwendet werden. Bei Schienenfahrzeugen ist es zudem bekannt, die Luftfilter als Grobstaubfilter auszuführen, um grobe Verschmutzungen, die unter anderem durch den Rad-Schiene-Kontakt, einen Abrieb an einer Schleifleiste eines Pantographen usw. aus den Luft führenden Systemen fernzuhalten.

Bei diesen Luftfiltern ist es problematisch, eine Aussage über einen aktuell vorliegenden Verschmutzungsgrad zu treffen, da keine zuverlässige Methode zur Zustandsüberwachung bekannt ist. Aus diesem Grund werden die Luftfilter in regelmäßigen Intervallen gewechselt, und zwar ohne konkrete Kenntnis, ob ein Austausch des Luftfilters tatsächlich schon aufgrund des vorliegenden Verschmutzungsgrades erforderlich ist.

Zudem ist es zur Zustandsüberwachung eines Verschmutzungsgrades eines solchen Luftfilters bekannt, Differenzdruckmessungen am Luftfilter vorzunehmen. Dieser Ansatz führt jedoch nicht zu ausreichend zuverlässigen Ergebnissen.

Ausgehend hiervon liegt der Erfindung die Aufgabe zugrunde, ein Luftfilter der eingangs genannten Art derart weiterzuentwickeln, dass sich sein Verschmutzungsgrad zuverlässig ermitteln lässt, sowie ein Verfahren zum Bestimmen des Verschmutzungsgrades des Luftfilters anzugeben.

Diese Aufgabe wird hinsichtlich des Luftfilters gelöst durch einen Luftfilter mit den Merkmalen des Anspruchs 1.

Danach zeichnet sich das eingangs beschriebene Luftfilter dadurch aus, dass die Filtermatte mit einer elektrisch leitfähigen Beschichtung versehen ist und elektrische Kontakte zur Beaufschlagung der Beschichtung mit einer Messspannung aufweist.

Die elektrischen Kontakte sind bevorzugt an gegenüberliegenden Seiten der Filtermatte auf deren Oberfläche angeordnet.

Die elektrisch leitfähige Beschichtung in Kombination mit den vorgesehenen Kontakten gestattet es, über eine Strommessung Aussagen über einen Verschmutzungsgrad des Luftfilters zu treffen. Für ein jeweiliges Luftfilter kann in Vorversuchen mit vorbestimmten Verschmutzungsgraden ermittelt werden, bei welchem Verschmutzungsgrad welche Stromstärke zu erwarten ist.

Die Luftfilter können als herkömmliche, gefaltete Papierfilter oder auch als geschichtete Schaumstofflagenfilter ausgebildet sein. Unabhängig vom Material des Luftfilters ist die Beschichtung der Gestalt, dass eine erforderliche Porosität des Luftfilters nicht erheblich vermindert wird.

Vorteilhafterweise ergibt es sich, dass das Luftfilter zustandsorientiert in Stand gehalten werden kann und insbesondere noch einsatzfähige Luftfilter nicht nach Ablauf einer vorbestimmten Zeit ausgetauscht werden. Zudem können besondere Ereignisse, die zu einer erhöhten Verschmutzung des Luftfilters führen können, erkannt werden. Auch ergibt sich ein verbessertes Raumklima in Fahrzeugen zur Personenbeförderung, da eine Luftleistungsreduktion in Folge zu stark verschmutzter Luftfilter vermindert oder sogar verhindert werden kann.

Die Beschichtung ist bevorzugt aus einem antimikrobiellen Material gebildet. Dies hat den Vorteil, dass der Luftfilter zusätzlich einen Eintrag von Krankheitserregern in einen Fahrgastinnenraum des Fahrzeugs zur Personenbeförderung deutlich vermindert.

Die Beschichtung ist bevorzugt aus einer Legierung aus Nickel- oder Silberbasis gebildet. Insbesondere kann die Beschichtung metallischer Anteile und die metallischen Anteile berührende Anteile von MnO₂ aufweisen, wobei der metallische Anteil aus Ag und/oder Ni besteht und wobei das MnO₂ zumindest teilweise in der γ-Modifikation des MnO₂ vorliegt. Eine solche Beschichtung ist Gegenstand der EP 2 352 377 B1 der Siemens Aktiengesellschaft.

Die Beschichtung kann eine metallische Lage aufweisen, auf der eine nur teilweise deckende Lage aus MnO₂ aufgebracht ist. Die betreffende metallische Lage umhüllt somit beispielsweise Fasermaterial der Filtermatte und trägt die nur teilweise deckende Lage aus MnO₂.

Alternativ dazu ist es auch möglich, dass die Beschichtung aus einer metallischen Matrix besteht, in die Partikel aus MnO₂ eingebettet sind. Im Unterschied zu der zuvor erläuterten Ausführungsform, bei der die Beschichtung zweistufig auf die Filtermatte aufgebracht wird, wird bei Aufbringen der metallischen Matrix lediglich ein Verfahrensschritt nötig, die Beschichtung auf dem Fasermaterial abzuscheiden.

Bevorzugt ist die Beschichtung mittels Kaltgasspritzen auf die Filtermatte aufgebracht.

Die oben angegebene Aufgabe wird hinsichtlich des Verfahrens zur Bestimmung eines Verschmutzungsgrades eines Luftfilters gelöst durch ein Verfahren nach Anspruch 9. Bei diesem Verfahren wird eine Spannungswelle an die elektrischen Kontakte der Beschichtung angeschlossen, eine Auswerteeinheit berechnet aus der Betriebsspannungsquelle und einer mittels eines Strommessgerätes erfassten Stromstärke den Verschmutzungsgrad des Luftfilters. Bevorzugt wird als Spannungsquelle eine Niederspannungsquelle betrieben. Dies bedeutet, dass bei Einsatz von Wechselspannung ein Wert von 1 kV und bei Gleichspannung ein Wert von 1,5 V nicht überschritten wird.

Ausführungsbeispiele der Erfindung werden nachfolgen unter Bezugnahme auf die Zeichnungen noch näher erläutert, wobei funktionsähnliche Komponenten mit denselben Bezugszeichen bezeichnet sind. Es zeigen:
- Figur 1: eine schematische Draufsicht auf ein Luftfilter zum Einsatz bei einem Klimagerät,
- Figur 2: eine Schnittansicht eines Randabschnittes des Luftfilters von Fig. 1 in einer ersten Ausführungsform,
- Figur 3: eine Schnittansicht eines Randabschnittes von Fig. 1 in einer zweiten Ausführungsform und
- Figur 4: eine Schnittansicht eines Randabschnittes von Fig. 1 in einer dritten Ausführungsform.

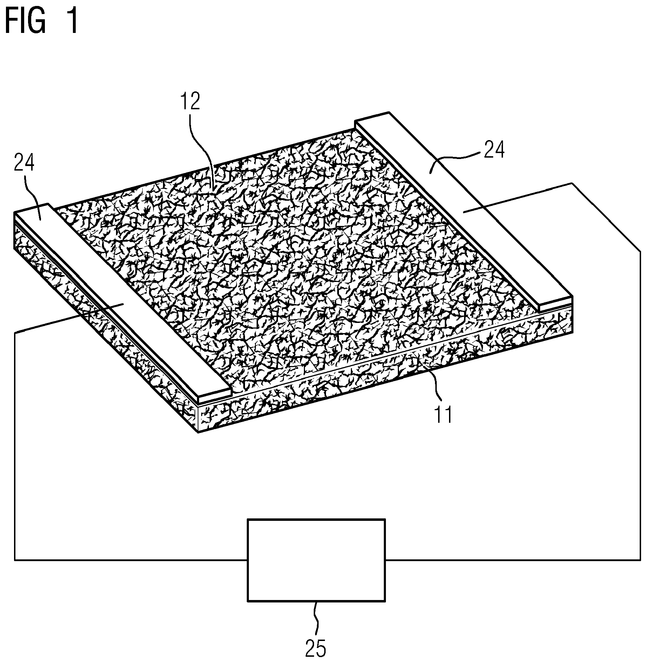

Figur 1 zeigt eine Filtermatte 11 für ein Luftfilter zum Einsatz bei einem Klimakanal. Die Filtermatte 11 weist eine Oberfläche 12 auf, in deren Bereich das Material der Filtermatte 11 mit einer elektrisch leitfähigen Beschichtung ausgestattet ist. Insofern verschließt die Beschichtung 15 nicht die Oberfläche 12 der Filtermatte 11 sondern ist lediglich auf dem der Oberfläche 12 zugeordneten Material der Filtermatte abgeschieden, so dass eine Luftdurchlässigkeit der Filtermatte 11 erhalten bleibt.

Die Filtermatte 11 ist mit zwei elektrischen Kontakten 24 ausgestattet, die jeweils entlang einander gegenüberliegenden Seiten der Filtermatte 11 verlaufen und dort auf die Oberfläche 12 der Filtermatte aufgebracht sind. Eine Mess- und Auswerteeinheit 25 umfasst eine Niederspannungsquelle, mittels derer eine Spannung an die elektrischen Kontakte 24 angelegt wird. Zudem umfasst die Mess- und Auswerteeinheit 25 ein Amperemeter, mit dem der Strom messbar ist, der bei Anlegen der Spannung zwischen den elektrischen Kontakten 24 fließt. Alternativ kann aus Spannung und gemessener Stromstärke auch der Ohmsche Widerstand der Filtermatte 11 bestimmt werden.

Es wird ausgenutzt, dass eine gemessene Stromstärke von einem Verschmutzungsgrad der Filtermatte 11 abhängt. Diese Abhängigkeit kann in Kallibrierungsmessungen ermittelt und dann bei aktuellen Messungen des Verschmutzungsgrades berücksichtigt werden.

Die elektrischen Kontakte 24 können auch derart dimensioniert und angeordnet sein, dass nur ein repräsentativer Teil der Beschichtung 15 mit Spannung beaufschlagt wird.

Die Mess- und Auswerteeinheit 25 greift zur Ausgabe eines aktuell ermittelten Verschmutzungsgrades auf historische Daten zu, welche einen zuvor empirisch gewonnenen Verlauf für die Abhängigkeit der gemessenen Stromstärke/des gemessenen Ohmschen Widerstand vom Verschmutzungsgrad der Filtermatte 11 umfassen.

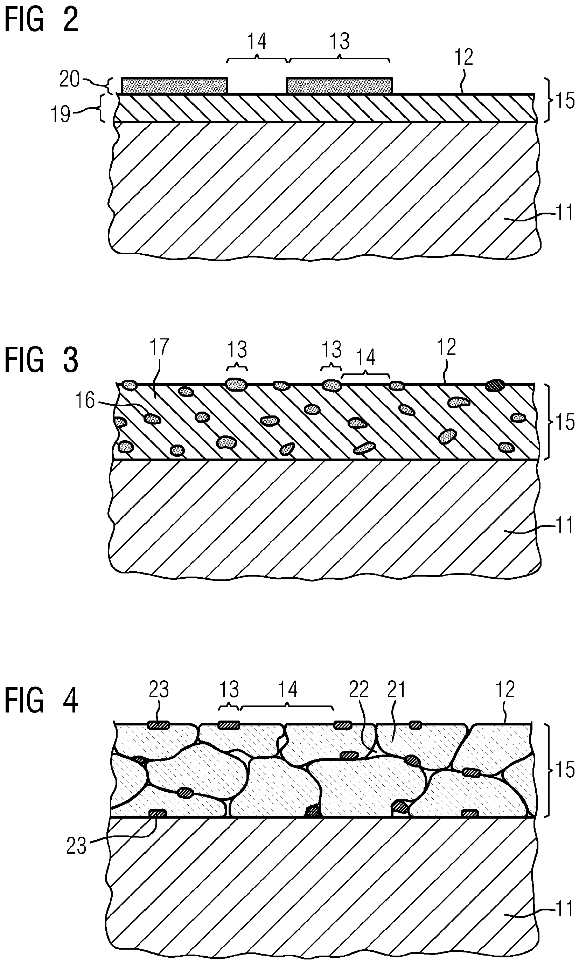

Die Figuren 2 bis 4 zeigen jeweils einen mikroskopisch kleinen Abschnitt der Filtermatte 11 mit der Oberfläche 12, die antimikrobielle Eigenschaften aufweist. Diese Eigenschaften werden dadurch erzeugt, dass die Oberfläche jeweils einen Anteil 13 hat, der aus MnO₂ besteht und weiterhin ein metallischer Anteil 14 aus Ag oder Ni zur Verfügung gestellt wird.

Der Aufbau der Filtermatte 11, der jeweils im Schnitt dargestellt ist, weist jedoch Unterschiede auf.

Gemäß Figur 2 ist eine Filtermatte 11 dargestellt, welche aus einem elektrisch nicht leitenden Material besteht. Daher wird auf diese Filtermatte 11 eine metallische Schicht 19 aus Ni oder Ag aufgebracht. Auf dieser Schicht, die den Anteil 14 zur Verfügung stellt, wird MnO₂ 20 aufgebracht, so dass auch Anteile 13 entstehen. Eine Beschichtung 15 umfasst die metallische Schicht 19 und die MnO₂-Abschnitte 20.

In Figur 3 ist dargestellt, dass die metallische Schicht auch mit Partikeln 16 aus MnO₂ dotiert sein kann, d. h., dass sich diese Partikel in der metallischen Matrix 17 der metallischen Schicht 15 befinden. Insofern bilden sie auch denjenigen Teil der Oberfläche 12, der den Anteil 13 zur Verfügung stellt. Der Rest der Oberfläche bildet den Anteil 14.

In Figur 4 wird die Beschichtung 15 durch eine keramische Matrix 21 gebildet, wobei diese Poren 22 aufweist, welche die innere Oberfläche im Vergleich zur äußeren Oberfläche 12 des Bauteils vergrößern und so auch einen antimikrobiellen Effekt verstärken. In der keramischen Matrix 21 sind metallische Partikel 23 vorgesehen, die sowohl an der Oberfläche 12 den Anteil 13 zur Verfügung stellen, als auch in den Poren antimikrobiell wirksam werden können. Wie auch bei Figur 2 und Figur 3 kann das Bauteil 11 gemäß Figur 4 aus einem beliebigen Filtermaterial bestehen, wobei nur die Haftung der Beschichtung 15 auf dem Bauteil 11 sichergestellt werden muss.

## Patentansprüche

1. Luftfilter zum Einsatz bei einem Klimagerät oder einem Klimakanal, mit einer Filtermatte zum Herausfiltern unerwünschter Partikel aus einem anströmenden Luftstrom,
**dadurch gekennzeichnet, dass**
die Filtermatte mit einer elektrisch leitfähigen Beschichtung versehen ist und elektrische Kontakte zur Beaufschlagung der Beschichtung mit einer Messspannung aufweist.

2. Luftfilter nach Anspruch 1,
**dadurch gekennzeichnet, dass**
die Beschichtung aus einem antimikrobiellen Material gebildet ist.

3. Luftfilter nach einem der Ansprüche 1 oder 2,
**dadurch gekennzeichnet, dass**
die Beschichtung aus einer Legierung auf Nickel- oder Silberbasis gebildet ist.

4. Luftfilter nach Anspruch 3,
**dadurch gekennzeichnet, dass**
die Beschichtung metallische Anteile und die metallischen Anteile berührende Anteile von MnO₂ aufweist, wobei der metallische Anteil aus Ag und/oder Ni besteht und wobei das MnO₂ zumindest teilweise in der γ-Modifikation des MnO₂ vorliegt.

5. Luftfilter nach Anspruch 4,
**dadurch gekennzeichnet, dass**
die Beschichtung (15) eine metallische Lage (19) aufweist, auf der eine nur teilweise deckende Lage (20) aus MnO₂ aufgebracht ist.

6. Luftfilter nach Anspruch 4,
**dadurch gekennzeichnet,**
**dass** die Beschichtung (15) aus einer metallischen Matrix (17) besteht, in die Partikel (16) aus MnO₂ eingebettet sind.

7. Bauteil nach Anspruch 4,
**dadurch gekennzeichnet, dass**
die Beschichtung (15) aus einer den Anteil (13) von MnO₂ zur Verfügung stellenden Keramik besteht, in die metallische Partikel (23) eingebettet sind.

8. Luftfilter nach einem der Ansprüche 1 bis 7,
**dadurch gekennzeichnet, dass**
die Beschichtung (15) mittels Kaltgasspritzen auf die Filtermatte (11) aufgebracht ist.

9. Verfahren zur Bestimmung eines Verschmutzungsgrades des Luftfilters nach einem der Ansprüche 1 bis 8, bei dem eine Spannungsquelle an die elektrischen Kontakte der Beschichtung angeschlossen wird und eine Mess- und Auswerteeinheit (25) aus der Betriebsspannung der Spannungsquelle und einer mittels eines Strommessgerätes erfassten Stromstärke den Verschmutzungsgrad des Luftfilters berechnet und ausgibt.

10. Verfahren nach Anspruch 9,
**dadurch gekennzeichnet, dass**
die Spannungsquelle mit Niederspannung betrieben wird.
